Europäisches Patentamt

European Patent Office

Office européen des brevets

(19)

(11) Publication number : **0 463 820 A2**

# EUROPEAN PATENT APPLICATION

(12)

(21) Application number : **91305638.8**

(51) Int. Cl.⁵ : **G11B 7/085**

(22) Date of filing : **21.06.91**

(30) Priority : **29.06.90 JP 170398/90**

(43) Date of publication of application :
**02.01.92 Bulletin 92/01**

(84) Designated Contracting States :
**DE FR GB**

(71) Applicant : **International Business Machines
Corporation
Old Orchard Road
Armonk, N.Y. 10504 (US)**

(72) Inventor : **Takekoshi, Makoto
Dai2GreenHeights7, 25-13 Tana-chou,
Midori-ku
Yokohama-shi, Kanagawa-ken (JP)**
Inventor : **Tipton, Lawrense D.
10014 E. Nicaragua Lane
Tucson, Arizona 85730 (US)**

(74) Representative : **Moss, Robert Douglas
IBM United Kingdom Limited Intellectual
Property Department Hursley Park
Winchester Hampshire SO21 2JN (GB)**

(54) **Disk drive apparatus and a seek method for spiral tracks.**

(57)    Described is an optical disk drive apparatus including an optical disk employing spiral tracks. The spiral tracks are delimited by a track boundary which extends radially across the disk. An optical head is movable over the disk surface and a track crossing signal is generated for every track crossed by the head. When commencing a seek operation from a current track to a target track, control means of the apparatus calculates the number of track crossing signals to be counted during the seek. This calculation takes account of any crossing of the track boundary during the seek and thus the calculated number of track crossings does not necessarily correspond to the track to track distance between current and target track.

EP 0 463 820 A2

FIG. 1

## Technical Field of the Invention

This invention relates to a disk drive apparatus and more particularly to a seeking technique for seeking spiral tracks on a disk of said apparatus.

## Background of the Invention

FIG.6 shows how spiral tracks are formed on an optical disk. In the figure, t1, t2, t3,, etc. have track identification numbers 1, 2, 3, etc., respectively. Likewise, s1, s2, s3, etc. have sector identification numbers 1, 2, 3, etc., respectively. Each sector is defined by a distinct combination of track identification number and sector identification number. In the disk of Fig. 6, the track identification number changes across the track boundary 120.

A seek operation is performed from the current track position tA to the target track position tB, and the number of tracks (Delta t) traversed during a seek operation is equal to tB-tA. The number of tracks corresponding to Delta t is held in a track number counter and the number of track crossing signals generated during the seek operation is counted. The seek operation is continued until the number of track crossing signals counted is equual to the number (Delta t) held in the track number counter.

However it is generally not possible to carry out seek operations across a disk employing spiral tracks simply by counting the number of track crossing signals equal to tB-tA.

Even when the head is not moving radially across the disk surface, (i.e. not performing a seek operation), a track crossing signal is generated each time the disk rotates e.g every time the head crosses the track boundary 120 shown in Fig. 6. On the other hand, if the disk does not rotate at all, the number of tracks through which the optical head passes during a seek operation (that is, the number of track crossing signals) accords with the track distance (Delta t). Therefore, when seeking across spiral tracks, the number of times the optical head crosses a track does not necessarily accord with the track distance (Delta t) by the effect of number of rotations of the disk during the period of the seek operation.

To avoid this problem during a seek operation, Japanese Published Unexamined Patent Application (PUPA) No.1-130327 discloses a method of reaching the target track wherein a detector is provided to detect the number of disk rotations during the period of seek operation. The seek operation is continued until the number of counted track crossing signals is equal to the track distance (Delta t). An additional seek operation is then required over a distance equal to the number of disk rotations detected by said detector.

The prior art method has a weakness in that two seek operations are required to finally reach the target position and thus it is more difficult to reach the target position in a short time, since the number of disk rotations becomes clear only after the first seek operation is actually performed.

The object of this invention is to make it possible to reach a target position on a spiral track in a short time.

## Disclosure of the Invention

Accordingly, the invention provides a disk drive apparatus for driving a recording disk having spiral tracks, a track being separated from an adjacent track by a radially extending track boundary, comprising: a head for reading information stored in said tracks; means for generating a track crossing signal each time the head crosses a track; means for determining the track-to-track distance from a current position to a target position for a desired seek operation and for determining the number of times the head will cross said track boundary during said seek operation; and control means for calculating the number of track crossing signals to be counted during said seek operation based on said two determined values and for generating a control signal to cause the head to seek based on said calculated number of track crossing signals.

By means of the apparatus of the present invention, the number of track crossing signals to be counted to reach the target position during a seek operation is calculated before the control signal is applied to the optical head to initiate movement thereof. In this way, a seek operation may be completed in a short time without the need of the additional seek operation as disclosed in the above described prior art.

It is preferred that the apparatus further comprises memory means for storing a relation between (a) said track-to-track distance to said target position and (b) the amount of rotation of said disk during said desired seek operation in terms of the number of sectors through which said head passes, wherein said number of track boundary crossings is determined from said stored relation.

In a preferred apparatus, the current position is defined by track tA and sector sA and the target position is defined by track tB and sector sB in a spiral track of said disk, said memory means storing the relation between (a) said track-to-track distance (Delta t) which is equal to tB-tA and (b) the number of sectors (Delta S) through which the head passes during said seek operation, the number of track boundary crossings being given by X = integer[(Delta S+sA)/S] and the number of track crossing signals to be counted during said seek operation being obtained from the expression: N=Delta t-X if a decimal of [(Delta S+sA)/S] is less than sB/S and from the expression: N=Delta t-X-1 if a decimal of [(Delta S+sA)/S] is greater than or equal to sB/S, where S is the number of sectors per track.

In a second aspect of the invention, there is provided a method for moving a head in a disk drive apparatus, from a current position to a target position over the surface of a disk employing spiral tracks, a track being separated from an adjacent track by a radially extending track boundary, said method comprising:

generating a track crossing signal each time the head crosses a track;

determining the track-to-track distance from said current position to said target position for a desired seek operation;

determining the number of times the head will cross said track boundary during said seek operation;

calculating the number of track crossing signals to be counted during said seek operation based on said two determined values; and

generating a control signal to cause the head to seek based on said calculated number of track crossing signals.

A preferred embodiment of the invention will now be described, by way of example only, with reference to the accompanying drawings.

Brief Description of the Drawings

FIG.1 is a block diagram showing the whole structure of a preferred embodiment of an optical disk drive apparatus according to the present invention;

FIG. 2(A) is a section view of the structure of an 4 optical disk;

Fig. 2(B) shows a idealised track crossing signal obtained from the structure of Fig 2A;

FIG. 3 is a table showing the relation between a track distance (Delta t) and the number (Delta S) of sectors through which an optical head passes during a seek operation as stored in a memory means in a preferred embodiment of the invention;

FIG. 4 is graphical representation showing the relation between a track distance (Delta t) and a seek time (Delta T) in a preferred embodiment;

FIG.5 is a flowchart showing a seek operation in said preferred embodiment;

FIG.6 is a top view of the structure of an optical disk incorporating spiral tracks.

Detailed Description of the Invention

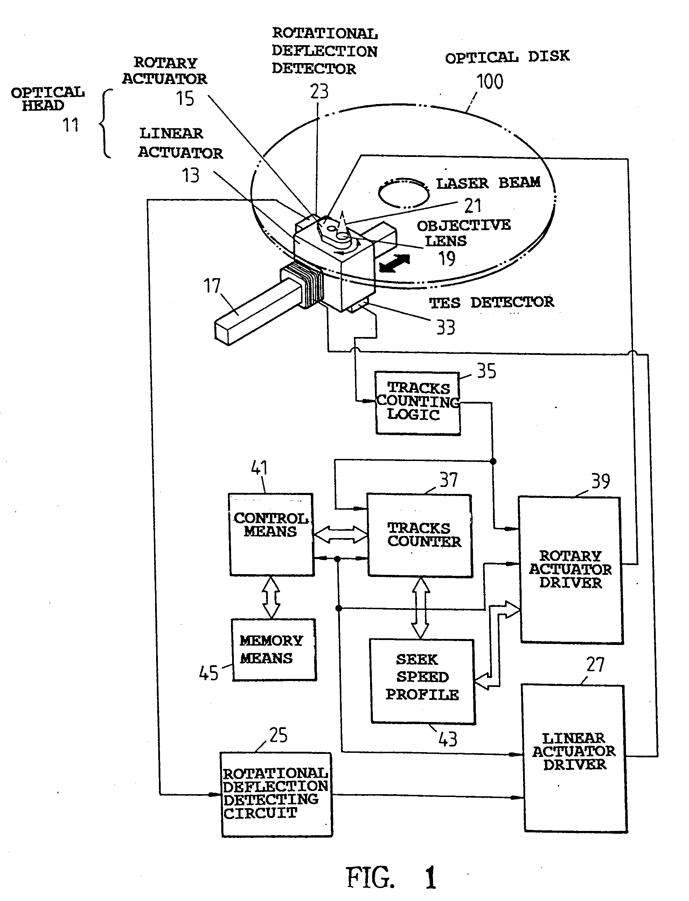

FIG.1 shows an optical disk drive apparatus according to one embodiment of the invention. In the figure, the optical head 11 comprises a linear actuator 13 and a rotary actuator 15. The linear actuator 13 is supported by a rail 17 so that it can move freely in a radial direction relative to the optical disk 100. The rotary actuator 15 is supported by the linear actuator 13 so that it can rotate freely within a predetermined range of rotation angles. The objective lens is fixed to the rotary actuator and focuses a laser beam 21 onto the optical disk.

Data is arranged on the optical disk in spiral tracks, and the laser beam spot moves across the spiral tracts when the rotary actuator 15 rotates on the linear actuator 13. A rotational deflection of the rotary actuator 15 with respect to the linear actuator 13 is detected by the rotational deflection detector 23, an output of which is provided to the rotational deflection detecting circuit 25 for amplification and level adjustment. An output of the rotational deflection detecting circuit is provided to the linear actuator driver 27 so that the movement of the linear actuator takes account of the direction of rotation and the quantity of the rotational deflection of the rotary actuator.

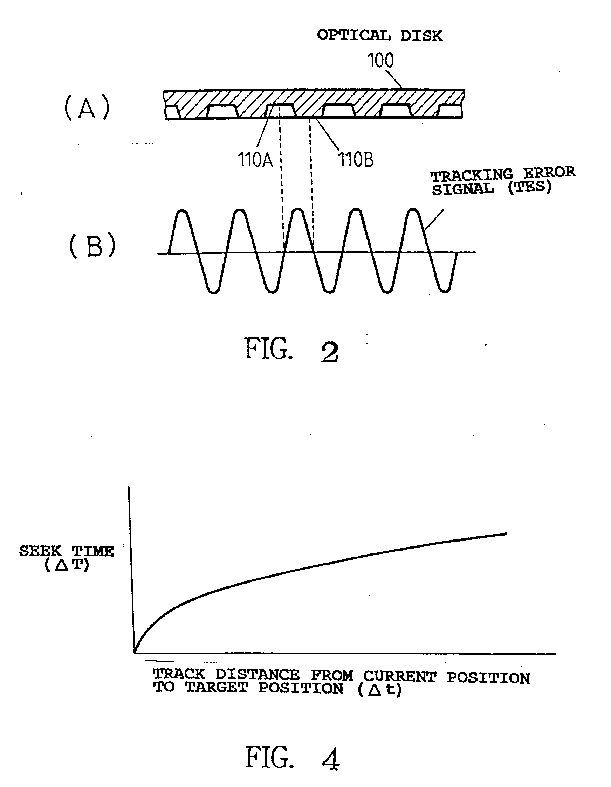

As shown in FIG.2(A), the spiral tracks of the optical disk 100 are formed in groups exemplified by group 110A. The positional relation of the laser beam spot with respect to a track (group 110A) in the direction in which the spot crosses the track is detected by the TES (tracking error signal) detector 33 mounted as track crossing signal generating means on the linear actuator.

As shown in FIG.2(B), when a laser beam spot crosses the tracks, a Tracking Error signal (TES) is generated. The TES is zero when the centre of a spot of a laser beam 21 accords with the middle of group 110A and that of land 110B. Measurement of the TES as the spot crosses the tracks thus gives a value corresponding to the number of tracks crossed.

The TES detected by the TES detector 33 is input to the track counting logic 35 from which a signal indicating that the laser beam spot has crossed one track is output each time it crosses the track. The output signal is provided to the track counter 37 and the rotary actuator driver 39.

At the start of a seek operation, a initial value corresponding to a target position is input to the track counter by the control means 41. During a seek operation, the value held in the track counter is decreased by one each time a track crrossrng signal is input from the track counting logic 35. When the content of the track counter 37 decreases to zero, the track counter 37 issues a signal informing the control means 41 that the content of the tracks counter 37 is zero, and in response to the signal, the control means 41 issues a control signal to the linear actuator driver 27 and the rotary actuator driver 39 to complete the seek operation of the optical head.

The content of the track counter 37 is also input to the seek speed profile means 43. The seek speed profile means 43 is provided for reference by the rotary actuator driver 39 for the purpose of controlling the seek speed during a seek operation. The use of speed profiles is well known in the art. The seek speed profile means stores the relation between the number of tracks from a current position to a target position (that is, track distance Delta t) and a target speed. The track counter gives the seek speed profile means information on the current position during a period of seek operation so that the value of a target speed given to the rotary actuator driver 39 can be changed to the required value as indicated by the seek speed profile.

The control means 41 is connected to the memory means 45 in which the relation between the number of tracks from a current position to a target position (track distance Delta t) and a parameter indicative of the movement of the optical head 11 toward the target position is stored. The control means 41 calculates the number of track crossing signals to be counted during a seek operation, based on said stored relation at a time when a target position is given, and generates a control signal causing the optical head 11 to seek based on the number of the calculated track crossing signals.

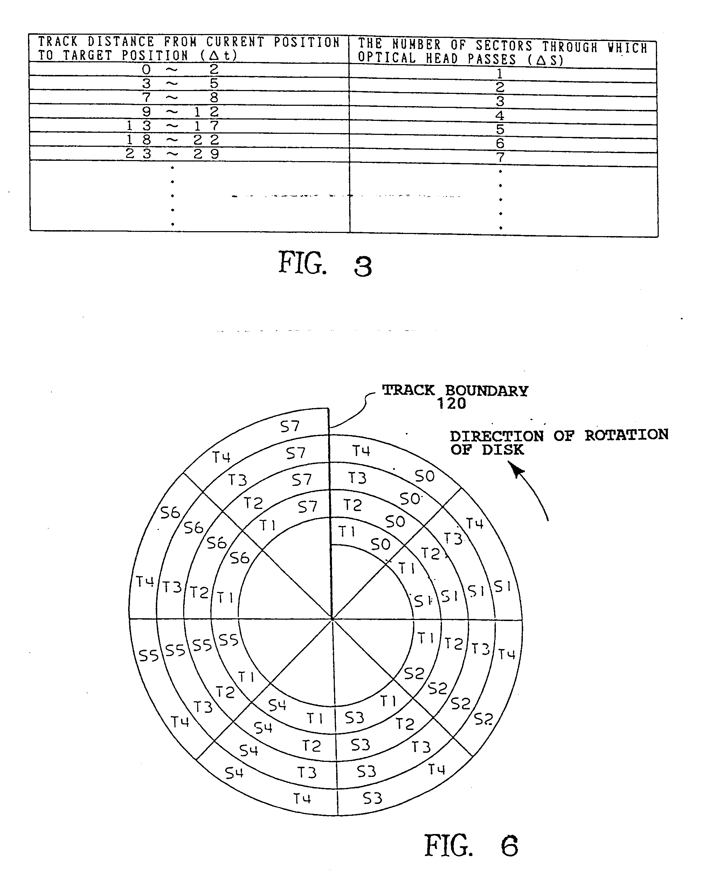

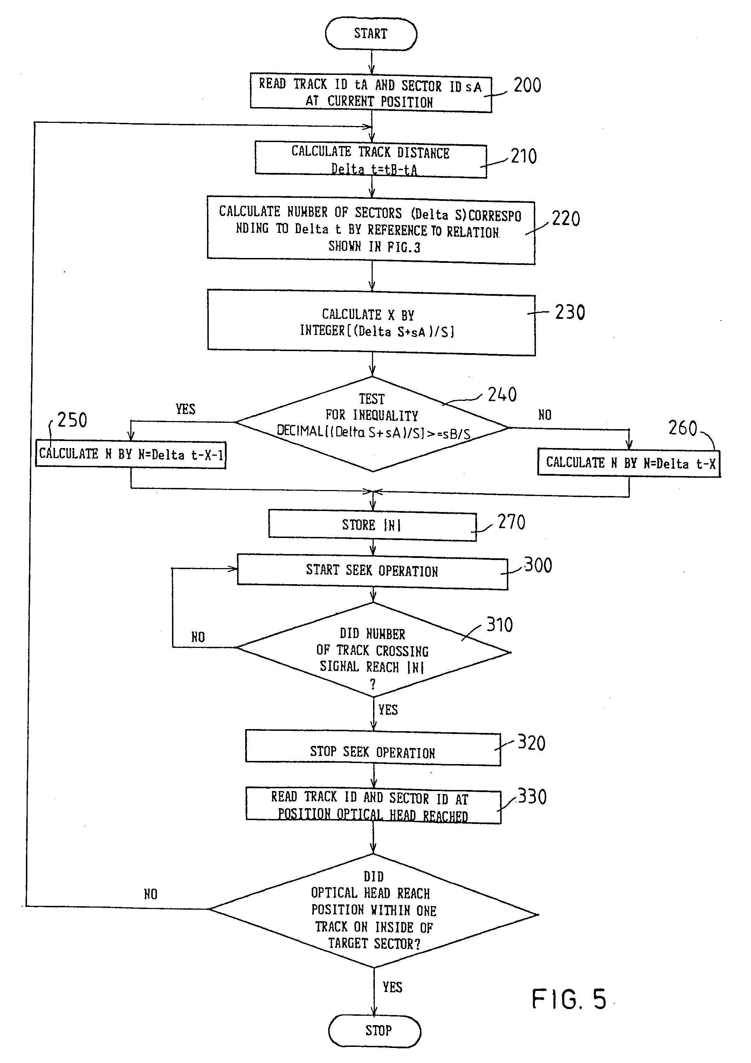

FIG.3 shows the content of memory means 45 in which is stored the relation between the number of tracks from a current position to a target position (Delta t) and the number of sectors (Delta S) through which the optical head 11 passes during a seek operation. According to the relation illustrated in the figure, for example, if a seek operation is performed over a distance within the range of the 9 - 12 tracks (Delta t= 9 to 12), the optical head 11 will pass through four sectors (Delta S=4).

The relation shown in FIG.3 can be obtained as follows:

The seek speed of the optical head 11 is controlled by reference to the seek speed profile means and a predetermined seek speed is attained which is dependent on the track distance Delta t to a target track. Therefore, the relation between a track distance Delta t to a target track and a seek time Delta T in which the target track is reached during a seek operation is uniquely determined. FIG.4 shows the relation between a track distance Delta t and a seek time Delta T thus obtained.

The seek time Delta T given by Fig. 4 can be converted to Delta S representing the number of sectors through which the optical head passes during a period of seek operation as follows. First, the time required for one revolution of the optical disk 100 is fixed since the rotational speed of the optical disk 100 is held constant under control. If the time required for one revolution is Tr then Delta T/Tr represents the number of rotations of the optical disk 100 in the seek time Delta T. If the number of sectors per track is S (assuming that the number of sectors per track is constant across the disk), then Delta S is equal to (Delta T/Tr) x S i.e. the number of sectors through which the optical head 11 passes in the seek time Delta T. Since Tr and S are constants, a seek time Delta T can be converted to the number of sectors (Delta S) through which the optical head passes during a period of seek operation by the above expression.

The following description deals with a preferred embodiment of the seek operation given in the flowchart shown in FIG. 5. For the purposes of this description, it is assumed that a spiral track is placed in increased radial position from the centre point as it is turned clockwise, track identification numbers are arranged in the ascending order from inner tracks to outer tracks, sector identification numbers are arranged in the ascending order clockwise, and the disk rotates counterclockwise (Refer to FIG.6). Accordingly, when following a track, the optical head 11 moves from a sector position with a smaller sector identification number to a sector position with a larger sector identification number and moves from a track position with a smaller track identification number to a track position with a larger track identification number each time it crosses the track boundary 120. Also, it is assumed that the track distance Delta t is a positive number if the seek operation is performed in an outward radial direction and is a negative number if the seek is performed in an inward radial direction.

At the start of a seek operation, a track identification tA and sector identification sA corresponding to the current position of the optical head 11 are read first (Processing block 200). Then, being given a track identification tB and a sector identification sB at a target position, a seek distance (track distance Delta t) is obtained from the following expression (Processing block 210):

$$\text{Delta } t = tB\text{-}tA$$

The value of Delta S (the number of sectors through which the optical head passes during a seek operation) is then obtained from the relation between Delta t and Delta S shown in FIG.3 (Processing block 220). The number of times the optical head 11 will cross the track boundary 120 during a seek operation is obtained from the following equation (Processing block 230):

$$X = \text{Integer}[(\text{Delta } S + sA)/S]$$

The meaning of the above equation is as follows. (Delta S+sA) is the sum of the current sector position sA and Debta S and therefore indicates the last sector position which the optical head 11 will reach on conclusion of the seek operation. S is the number of sectors per track and the optical head 11 crosses the track boundary 120 each time it passes through S sectors. Therefore, the value X of the integer part of (Delta S+sA)/S indicates the number of times the optical head 11 crosses the track boundary 120 during a seek operation.

For seek operations for the spiral tracks, since the number of times the optical head 11 actually crosses tracks during the seek operation over the track distance Delta t is influenced by the number of times X when the optical head 11 crosses the track boundary 120, it must be corrected to remove its effect (Processing blocks 250 and 260). In general terms, the number of track crossing signals N to be detected by the head during a seek operation should be corrected to Delta t - X.

In this embodiment, the optical head is positioned within one track on the inside of a target sector sB so that the optical head can reach the target sector sB while the disk 100 rotates once without moving the optical head in a backward direction by performing only a track following operation after the completion of the seek operation. If the seek operation is completed at such a position, the optical head can reach the target sector position while the disk rotates once only by turning to the track following operation.

For this purpose, the value of the decimal of [(Delta S+sA)/S] and sB/S are compared with each other (Decision block 240). The value of the decimal of [(Delta S+sA)/S] indicates an angle that the position which the optical head 11 reaches when it moves by the number of sectors Delta S from the current sector sA, makes on the circumference of the track. On the other hand, sB/S indicates an angle that the position of the target sector sB makes on the circumference of the track. If the decimal of [(Delta S+sA)/S] $\geqq$ sB/S, then the counting of $|N|$ = Delta t-X track crossing signals will cause the optical head 11 to reach the target track tB but the head will have passed through the target sector sB. To avoid this, if the decimal of [(Delta S+sA)/S] $\geqq$ sB/S is established, $|N|$ is obtained from the following equation (Processing block 250):

$$N = \text{Delta } t\text{-}X\text{-}1$$

If the decimal of [(Delta S+sA)/S] % sB/S is established, $|N|$ is obtained from the following equation (Processing block 260):

$$N = \text{Delta } t\text{-}X$$

The absolute value of the number $|N|$ of track crossing signals to be counted during a period of seek operation thus obtained is stored in the tracks counter 37 (Processing block 270). Information on the direction of the seek operation is obtained from the sign of N.

Once the absolute value of N is stored, the seek operation commences (Processing block 300). The value in the track counter is decreased by one during the seek operation each time the optical head 11 crosses a track and and the track counter issues a signal when the value reaches zero. In accordance with the signal (decision block 310), the control means 41 stops the radial motion of the optical head. (Processing block 320).

Once the head is stopped, the track and sector identifications at the final position are read (Processing block 330) and a check is made to see if the optical head 11 is positioned within one track on the inside of the target position (Decision block 340). If the head is so positioned, the seek operation is completed. If the optical head 11 is not within one track on the inside of the target position, an attempt to calculate a track distance Delta t is made again (Processing block 210). Such a retry is an action taken in the case where for example, track crossing signals were counted by mistake due to an external noises, etc.. In a usual case where such a situation does not occur, the optical head 11 will be positioned within one track on the inside of the target position by only one seek operation.

In the above preferred embodiment, the relation between a track distance Delta t and the number of sectors Delta S was stored in the memory means. However, it will be appreciated that the relation between a track distance Delta t from a current position to a target position and an indicator for the movement of the optical head towards said target position can be stored in a form other than the above relation. For example, the relation between a track distance Delta t and that seek time Delta T can be stored. It will be appreciated also that reference to the speed profile indicating the relation between a track distance Delta t and a seek speed at that time can be made to calculate the number $|N|$ of tracks to be counted during the seek operation. It will be appreciated also that a track distance Delta t is not directly stored, but a certain value related to the track distance Delta t can be stored. However, if the relation between a track distance Delta t and the number of sectors Delta S is stored as in the preferred embodiment, a value to be referred to is directly stored so that the number $|N|$ of tracks can be calculated at a high speed and the very exact seek operation can be performed until a target position is reached based on the known number of sectors moved by the head.

The constitution of spiral tracks and the direction of the rotation of disk are not to be limited to the case of the above preferred embodiment.

In the above preferred embodiment, the optical head reached a position within the previous one track of a target sector. However, it will be appreciated that it can reach a position within a predetermined number of tracks rather than one track. It will be appreciated also that it can not only reach the target track, but pass through the target sector. In the above preferred embodiment, the position within the previous one track of the target sector refers to a position within one track on the inside of the target sector. However, it will be appreciated that the position can be a position within of track on the outside of the target sector according to the constitution of spiral tracks and the direction of the rotation of disk, that is, a position from which the optical head can reach the target sector during the track following operation while the disk rotates once.

## Claims

1. Disk drive apparatus for driving a recording disk having spiral tracks, a track being separated from an adjacent track by a radially extending track boundary (120), comprising:

   a head (11) for reading information stored in said tracks;

   means (35) for generating a track crossing signal each time the head crosses a track;

   means for determining the track-to-track distance from a current position to a target position for a desired seek operation and for determining the number of times the head will cross said track boundary during said seek operation; and

   control means (41) for calculating the number of track crossing signals to be counted during said seek operation based on said two determined values and for generating a control signal to cause the head to seek based on said calculated number of track crossing signals.

2. Apparatus as claimed in claim 1, further comprising memory means (45) for storing a relation between (a) said track-to-track distance to said target position and (b) the amount of rotation of said disk during said desired seek operation in terms of the number of sectors through which said head passes, wherein said number of track boundary crossings is determined from said stored relation.

3. Apparatus as claimed in claim 1, further comprising memory means for storing a relation between the track-to-track distance to said target position and the time taken for a seek operation, said number of track boundary crossings being determined from said stored relation.

4. Apparatus as claimed in claim 2 wherein the current position is defined by track tA and sector sA and the target position is defined by track tB and sector sB in a spiral track of said disk, said memory means storing the relation between (a) said track-to-track distance (Delta t) which is equal to tB-tA and (b) the number of sectors (Delta S) through which the head passes during said seek operation, the number of track boundary crossings being given by X = integer[(Delta S+sA)/S] and the number of track crossing signals to be counted during said seek operation being obtained from the expression: N=Delta t-X if a decimal of [(Delta S+sA)/S] is less than sB/S and from the expression: N=Delta t-X-1 if a decimal of [(Delta S+sA)/S] is greater than or equal to sB/S, where S is the number of sectors per track.

5. Apparatus as claimed in any preceding claim wherein the apparatus is an optical disk drive apparatus wherein an optical head reads information from tracks stored on an optical disk.

6. A method for moving a head, in a disk drive apparatus, from a current position to a target position over the surface of a disk employing spiral tracks, a track being separated from an adjacent track by a radially extending track boundary (120), said method comprising:

   generating a track crossing signal each time the head crosses a track;

   determining the track-to-track distance from said current position to said target position for a desired seek operation;

   determining the number of times the head will cross said track boundary during said seek operation;

   calculating the number of track crossing signals to be counted during said seek operation based on said two determined values; and

   generating a control signal to cause the head to seek based on said calculated number of track crossing signals.

7. A method as claimed in claim 6 wherein the current position is given by a track identification tA and a sector identification sA and the target position is given by a track identification tB and a sector identification sB, further comprising the steps of:

   previously storing the relation between a track distance Delta t=tB-tA from the current track to the target track and the number of sectors Delta S through which the head passes during a seek operation performed until the head reaches the target track, and

   obtaining an absolute value |N| of the number of track crossing signals to be counted during a seek operation performed until the target track is reached from the expression: N=Delta t-integer[(Delta S+sA)/S] if a decimal of [(Delta S+sA)/S] is less than sB/S and from the expression: N=Delta t-integer[(Delta S+sA)/S]-1 if a decimal of [(Delta S+sA)/S] is greater than or equal to sB/S where S is the number of sectors per track.

FIG. 1

OPTICAL DISK
100

(A)

110A 110B

TRACKING ERROR
SIGNAL (TES)

(B)

FIG. 2

SEEK TIME
($\Delta T$)

TRACK DISTANCE FROM CURRENT POSITION
TO TARGET POSITION ($\Delta t$)

FIG. 4

| TRACK DISTANCE FROM CURRENT POSITION TO TARGET POSITION ($\Delta t$) | THE NUMBER OF SECTORS THROUGH WHICH OPTICAL HEAD PASSES ($\Delta S$) |
|---|---|
| 0 ~ 2 | 1 |
| 3 ~ 5 | 2 |
| 7 ~ 8 | 3 |
| 9 ~ 1 2 | 4 |
| 1 3 ~ 1 7 | 5 |
| 1 8 ~ 2 2 | 6 |
| 2 3 ~ 2 9 | 7 |
| ⋮ | ⋮ |

FIG. 3

TRACK BOUNDARY 120

DIRECTION OF ROTATION OF DISK

FIG. 6

START

READ TRACK ID tA AND SECTOR ID sA — 200
AT CURRENT POSITION

CALCULATE TRACK DISTANCE — 210
Delta t=tB-tA

CALCULATE NUMBER OF SECTORS (Delta S)CORRESPO — 220
NDING TO Delta t BY REFERENCE TO RELATION
SHOWN IN FIG.3

CALCULATE X BY — 230
INTEGER[(Delta S+sA)/S]

TEST — 240
FOR INEQUALITY
DECIMAL[(Delta S+sA)/S]>=sB/S

YES            NO

250 — CALCULATE N BY N=Delta t-X-1      260 — CALCULATE N BY N=Delta t-X

STORE |N| — 270

START SEEK OPERATION — 300

DID NUMBER — 310
OF TRACK CROSSING
SIGNAL REACH |N|
?

NO        YES

STOP SEEK OPERATION — 320

READ TRACK ID AND SECTOR ID AT — 330
POSITION OPTICAL HEAD REACHED

DID
OPTICAL HEAD REACH
POSITION WITHIN ONE
TRACK ON INSIDE OF
TARGET SECTOR?

NO        YES

STOP

FIG. 5